# EUROPÄISCHE PATENTANMELDUNG

(11) **EP 3 995 891 A1**
(43) Veröffentlichungstag der Anmeldung: **11.05.2022**
(21) Anmeldenummer: 20020507.8
(22) Anmeldetag: 04.11.2020
(51) Int. Cl.: G03B 21/56

(54) **VORRICHTUNG ZUR INNENPROJEKTION**

(71) Anmelder: Matz Christesen, 24943 Flensburg (DE)
(72) Erfinder: Matz Christesen, 24943 Flensburg (DE)
(74) Vertreter: Döring, Frank Markus

(57) **Zusammenfassung**

Die Erfindung betrifft eine Vorrichtung zur Innenprojektion individueller Bilder auf die Oberflächen von Körpern, die die Projektion eines individuell vom Nutzer ausgewählten Bildes zu ermöglicht. Der Vorrichtung zur Rückprojektion auf eine aus transparatem Material bestehende Projektionshülle (B) ist ein Motivträger (E) vorgeschaltet, der das individuell gestaltete Motiv trägt. Dieses Motiv kann individuell gestaltet und entweder physisch ausgewechselt oder elektronisch verändert werden. Es kann eine Software mit Entzerrungsalgorithmen eingesetzt werden, die die Darstellung von Motiven auf den Oberflächen beliebig gestalteter Körper ermöglicht.

## Beschreibung

Die Erfindung betrifft eine Vorrichtung zur Innenprojektion individueller Bilder auf die Oberflächen von Körpern.

Vorhandene Technologie zeigt Verfahren zur Innenprojektion von Bildern auf kugelförmige Körper. Aus der WO0265207A1 ist ein Verfahren bekannt, bei dem eine unterhalb einer Kugel angeordnete Lichtquelle mittels Spiegelprojektion von Innen auf die Oberfläche des Kugelkörpers projiziert wird. Projiziert wird ein feststehendes Bild.

Die Aufgabe der beschriebenen Erfindung ist es, die Projektion eines individuell vom Nutzer ausgewählten Bildes zu ermöglichen.

Die technische Lösung besteht darin, dass Bilder mittels einer Lichtquelle und optischen Linsen und Spiegeln im Wege der Rückprojektion auf eine aus transparatem Material bestehende Projektionshülle von innen projiziert werden. Dabei ist der Lichtquelle ein Motivträger vorgeschaltet, der das individuell gestaltete Motiv trägt. Dieses Motiv kann individuell gestaltet und ausgewechselt werden.

Der Motivträger ist aus einem lichtdurchlässigen Material gefertigt. Er kann entweder physisch ausgewechselt oder elektronisch verändert werden.

Soweit die Motive elektronisch verändert werden, kann eine Software mit Entzerrungsalgorithmen eingesetzt werden, die die Darstellung des Motivs auf dem Motivträger so berechnet, dass das Motiv auf der Projektionshülle verzerrungsfrei dargestellt wird. Das ermöglicht die Darstellung von Motiven auf den Oberflächen beliebig gestalteter Körper.

In die Vorrichtung kann ein Rechner integriert werden, der mittels Kabel oder kabelloser Verbindung mit dem Motivträger verbunden ist. Die Steuerung des Motivträgers und die optionale Anwendung der Software mit Entzerrungsalgorithmen kann auch durch einen nicht integrierten Rechner oder ein Smartphone von außen mittels kabelloser Verbindung erfolgen.

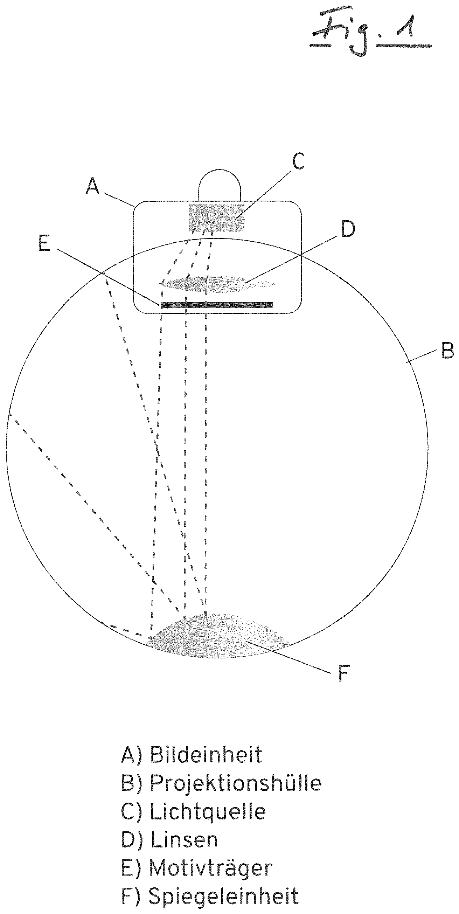

Die beigefügten Zeichnungen von zwei Ausführungsbeispielen mit kugelförmigen Körpern zeigen (Fig. 1) die Projektionshülle (B) mit der Bildeinheit (A), bestehend aus der Lichtquelle (C), den Linsen (D) und den Motivträger (E) sowie der Spiegeleinheit (F), die für die Projektion auf die Außenhülle sorgt.

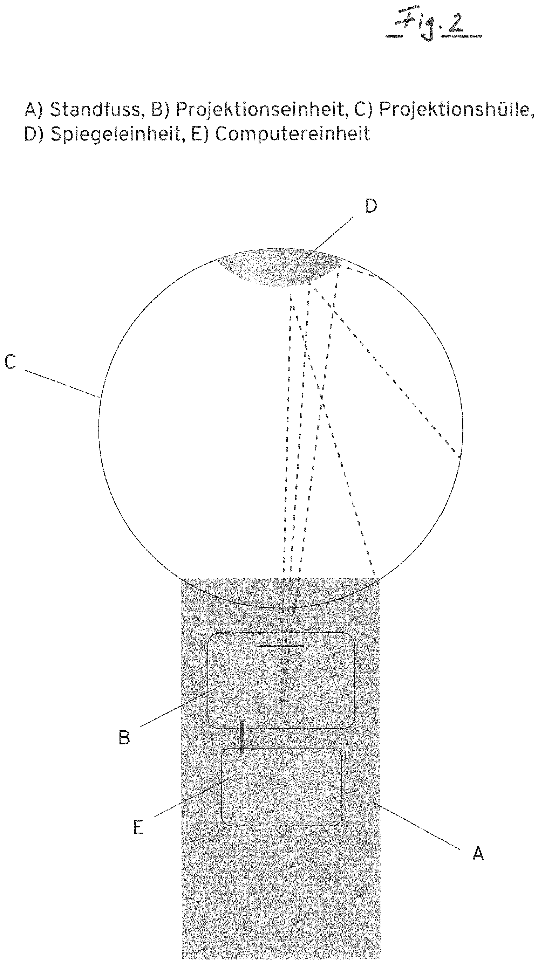

Fig. 2 zeigt ein Ausführungsbeispiel mit einem Standfuß (A) und einer unterhalb des Projektionsobjekts angeordneten Projektionseinheit (B), einer integrierten Computereinheit (E) mit einer oben im Projektionsobjekt liegenden Spiegeleinheit (D), die die Projektion auf die Projektionshülle (C) ermöglicht.

## Patentansprüche

1. Vorrichtung für die Innenprojektion von Bildern auf die Oberflächen von Körpern, **dadurch gekennzeichnet, dass** ein auf einem auswechselbaren Motivträger abgebildetes Motiv mit Hilfe einer Lichtquelle sowie Linsen- und Spiegelelementen von der dem Betrachter abgewandten Seite auf eine Projektionshülle projiziert wird.

2. Vorrichtung nach Anspruch 1, **dadurch gekennzeichnet, dass** der Motivträger physisch ausgewechselt werden kann.

3. Vorrichtung nach Anspruch 1, **dadurch gekennzeichnet, dass** das auf dem Motivträger befindliche Motiv elektronisch verändert werden kann.

4. Vorrichtung nach Anspruch 3, **dadurch gekennzeichnet, dass** die Erzeugung des Motivs auf dem Motivträger durch eine Software mit Entzerrungsalgorithmen gesteuert wird.

5. Vorrichtung nach Anspruch 3, **dadurch gekennzeichnet, dass** die Steuerung des Motivträgers durch einen in die Vorrichtung integrierten Rechner erfolgt.

6. Vorrichtung nach Anspruch 3, **dadurch gekennzeichnet, dass** die Steuerung des Motivträgers mittels kabelloser Verbindung durch einen nicht in die Vorrichtung integrierten Rechner erfolgt.
